# EUROPEAN PATENT SPECIFICATION

(11) **EP 3 757 576 B1**
(45) Date of publication and mention of the grant of the patent: **08.03.2023**
(21) Application number: 19183386.2
(22) Date of filing: 28.06.2019
(51) Int. Cl.: G01N 35/00, B01L 3/00, G01N 35/04

(54) **METHOD OF HANDLING LABORATORY SAMPLE CONTAINERS BY MEANS OF A LABORATORY SAMPLE CONTAINER HANDLING SYSTEM, LABORATORY SAMPLE CONTAINER HANDLING SYSTEM AND LABORATORY AUTOMATION SYSTEM**
VERFAHREN ZUR HANDHABUNG VON LABORPROBENBEHÄLTERN MITHILFE EINES LABORPROBENBEHÄLTERHANDHABUNGSSYSTEMS, LABORPROBENBEHÄLTERHANDHABUNGSSYSTEM UND LABORAUTOMATISIERUNGSSYSTEM
PROCÉDÉ DE MANIPULATION DE CONTENANTS D'ÉCHANTILLONS DE LABORATOIRE AU MOYEN D'UN SYSTÈME DE MANIPULATION DE CONTENANT D'ÉCHANTILLON DE LABORATOIRE, SYSTÈME DE MANIPULATION DE CONTENANT D'ÉCHANTILLON DE LABORATOIRE ET SYSTÈME D'AUTOMATISATION DE LABORATOIRE

(43) Date of publication of application: 30.12.2020
(73) Proprietor: Roche Diagnostics GmbH, 68305 Mannheim (DE); F. Hoffmann-La Roche AG, 4070 Basel (CH)
(72) Inventor: Smit, Werner, 6332 Hagendorn (CH); Weber, Florian, 8773 Haslen (CH); Hollander, Bauke Sjoerd, 8048 Zuerich (CH); Triunfo, Riccardo, 6300 Zug (CH); Tan, Chye Yin Priscillia, 6438 Ibach (CH)
(74) Representative: Patentanwälte Ruff, Wilhelm, Beier, Dauster & Partner mbB

(56) References cited:
- EP-A2- 0 342 730
- WO-A1-2017/157784
- US-A1- 2005 058 574

## Description

The invention relates to a method of handling laboratory sample containers by means of a laboratory sample container handling system, to a laboratory sample container handling system and to a laboratory automation system.

EP 0 342 730 A2 discloses a method of handling laboratory sample containers by means of a laboratory sample container handling system, wherein the system checks, if an ID information assigned to a laboratory sample container is unique or not unique within the laboratory sample container handling system.

WO 2017/157784 A1 discloses a method of handling laboratory sample containers by means of a laboratory sample container handling system using an ID information assigned to a laboratory sample container.

US 2005/0058574 A1 discloses a method of handling laboratory sample containers by means of a laboratory sample container handling system using an ID information assigned to a laboratory sample container.

It is the object of the invention to provide for a method of handling laboratory sample containers by means of a laboratory sample container handling system, a laboratory sample container handling system and a laboratory automation system being highly flexible and performant.

The method of handling laboratory sample containers by means of a laboratory sample container handling system comprises the following steps.

Manually or automatically providing a laboratory sample container comprising an assigned ID information to the laboratory sample container handling system.

The laboratory sample container may e.g. be embodied as a conventional laboratory sample tube.

After the laboratory sample container has been provided, the assigned ID information is read, e.g. by means of a barcode reader, a RFID reader, a camera, etc.

Then it is checked, if the read ID information is unique or not unique within the laboratory sample container handling system.

If the read ID information is unique, the ID information remains unchanged and the laboratory sample container and/or a laboratory sample contained in the laboratory sample container may be further processed based on the original ID information.

If the read ID information is not unique within the laboratory sample container handling system, a new ID information is assigned to the laboratory sample container, wherein the new ID information is unique within the laboratory sample container handling system.

According to an embodiment, the ID information is embodied as a barcode printed on a label attached to the laboratory sample container. The step of assigning the new ID information to the laboratory sample container is performed by attaching a new label to the laboratory sample container, wherein a barcode representing the new ID information is printed on the new label.

According to an embodiment, additionally or alternatively, the ID information is embodied as a value stored in a RFID tag attached to the laboratory sample container. The step of assigning the new ID information to the laboratory sample container is performed by overwriting the old value by the new ID information.

According to an embodiment, the laboratory sample container and or the laboratory sample contained in the laboratory sample container is further processed after the new ID information has been assigned to the laboratory sample container based on the new ID information.

A cap, if any, closing the laboratory sample container is removed after the new ID information has been assigned to the laboratory sample container.

According to an embodiment, the laboratory sample container comprises/contains a laboratory sample, wherein the laboratory sample is analyzed based on the ID information. E.g. the different types of analyses performed on the laboratory sample may be determined based on the ID information.

According to an embodiment, the laboratory sample containers are provided to the laboratory sample container handling system in a bulk commodity, wherein the laboratory sample containers are singularized before being further processed, wherein the new ID information is assigned to the laboratory sample containers after, in particular immediately after, the laboratory sample containers have been singularized.

The laboratory sample container handling system comprises a reader being adapted to read ID information being assigned to a laboratory sample container provided to the laboratory sample container handling system, an ID changer being adapted to assign a new ID information to the laboratory sample container, and a control unit coupled to the reader and to the ID changer. The control unit is adapted to control the reader to read an assigned ID information of a laboratory sample container provided to the laboratory sample container handling system, to check, if the read ID information is unique or not unique within the laboratory sample container handling system, and if the read ID information is not unique within the laboratory sample container handling system, to control the ID changer to assign a new ID information to the laboratory sample container, wherein the new ID information is unique within the laboratory sample container handling system, and to cause the removing of a cap closing the laboratory sample container after the new ID information has been assigned to the laboratory sample container.

According to an embodiment, the laboratory sample container handling system comprises a middleware unit being adapted to check, if the read ID information is unique or not unique within the laboratory sample container handling system, and if the read ID information is not unique within the laboratory sample container handling system, to assign a new ID information to the laboratory sample container, wherein the new ID information is unique within the laboratory sample container handling system.

According to an embodiment, the reader is a barcode reader.

According to an embodiment, the reader is a RFID reader.

According to an embodiment, the ID changer is a printer, in particular a label printer.

According to an embodiment, the ID changer is a RFID reader being adapted to reprogram an electronic storage of a RFID tag.

The laboratory automation system comprises the laboratory sample container handling system as described above and a number, e.g. between 1 and 100, of laboratory stations being adapted to process a laboratory sample contained in the laboratory sample container based on the ID information.

The invention will now be described in detail with respect to the drawing, in which:

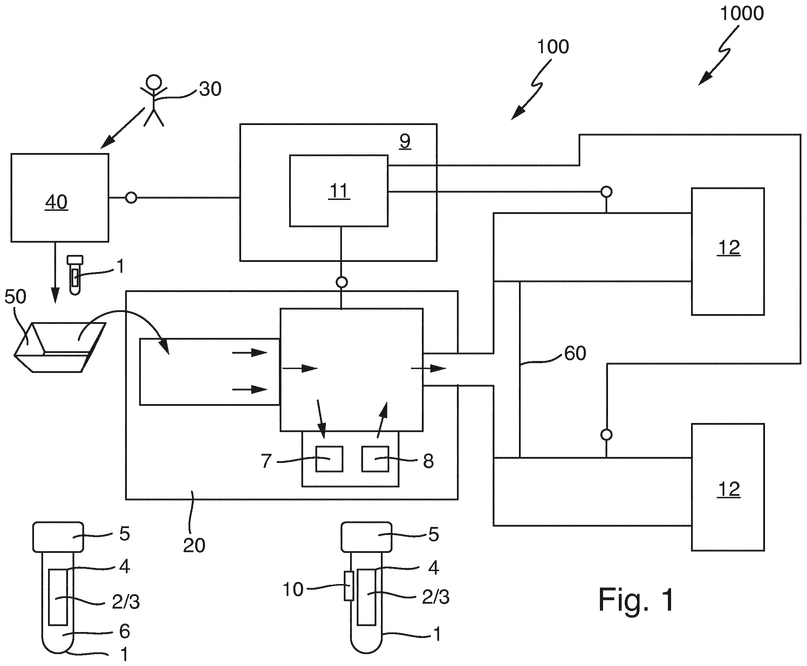

- Fig. 1: schematically depicts a laboratory automation system comprising an inventive laboratory sample container handling system.

Fig. 1 schematically depicts a laboratory automation system 1000 comprising an inventive laboratory sample container handling system 100.

A control unit 9 controls the operation of the laboratory automation system 1000.

The laboratory sample container handling system 100 is adapted to handle or process laboratory sample containers 1 containing laboratory samples 6 obtained from patients 30 during sample preparation 40. The laboratory samples 6 may be e.g. blood samples or any kind of body fluids, etc. The laboratory sample containers 1 are closed by means of caps 5 after the laboratory samples 6 have been filled into the laboratory sample containers 1.

Each laboratory sample container 1 comprises an assigned ID information 2. The ID information 2 may e.g. be embodied as a barcode 3 printed on a label 4 attached to the laboratory sample container 1. Alternatively or additionally, the ID information 2 may e.g. be embodied as a value stored in a RFID tag 10 attached to the laboratory sample container 1.

After sample preparation, the laboratory sample containers 1 are collected in a container 50, wherein the laboratory sample containers 1 collected in the container 50 are fed to a bulk loading device 20.

A reader 7 is adapted to read the ID information 2 being assigned to a laboratory sample container 1 provided to the bulk loading device 20. The reader 7 may e.g. be embodied as a barcode reader or a RFID reader.

The bulk loading device 20 is adapted to singularize the laboratory sample containers 1 and to provide the singularized laboratory sample containers 1 to a transport device 60.

After the laboratory sample containers 1 have been singularized, the reader 7 reads the ID information 2 being assigned to a laboratory sample container 1 and provides the read ID information 2 to the control unit 9.

The control unit 9 then checks, if the read ID information 2 is unique or not unique within and laboratory automation system 1000 (and consequently in the laboratory sample container handling system 100).

If the read ID information 2 is not unique within the laboratory automation system 1000, the control unit 9 initiates that a new ID information 2 is assigned to the laboratory sample container 1, wherein the new ID information 2 is unique within the laboratory automation system 1000.

The laboratory sample container 1 is further processed after the new ID information 2 has been assigned to the laboratory sample container 1 based on the new ID information 2.

If the read ID information 2 is unique within the laboratory automation system 1000, the ID information 2 remains unchanged.

The step of changing the ID information 2 is performed by means of an ID changer 8 being adapted to assign a new ID information 2 to the laboratory sample container 1. The ID changer 8 may e.g. be embodied as a label printer or as a RFID reader.

If the ID changer 8 is embodied as a label printer, the new ID information 2 is assigned to the laboratory sample container 1 by attaching a new label 4 to the laboratory sample container 1, wherein a barcode 3 representing the new ID information 2 is printed on the new label 4 by means of the label printer.

If the ID changer 8 is embodied as a RFID reader, the new ID information 2 is assigned to the laboratory sample container 1 by overwriting the stored value by the new ID information 2.

After checking and replacing the ID information 2, if necessary, the cap 5 closing the laboratory sample container 1 is removed and the open laboratory sample container 1 is provided to the transport device 60.

The laboratory automation system 1000 comprises a number of laboratory stations 12 being adapted to process a laboratory sample 6 contained in the laboratory sample container 1 based on the ID information 2.

The laboratory sample container handling system 100 may comprise a middleware unit 11 which may be part of the control unit 9 or may be embodied in data communication with the control unit 9.

The middleware unit 11 may be adapted to check, if the read ID information 2 is unique or not unique within the laboratory automation system 1000, and if the read ID information 2 is not unique within the laboratory automation system 1000, to assign a new ID information 2 to the laboratory sample container 1, wherein the new ID information 2 is unique within the laboratory automation system 1000.

According to the invention, a laboratory sample container may be relabeled with a unique sample ID or ID information based on information provided by the middleware unit 11. The provided information may comprise information, if relabeling must be done or not, and optionally the new and unique label-ID or ID information.

The process may be as follows:
1. Sample tubes 1 closed by caps 5 are thrown into the bulk loader device 20
2. The sample tube 1 is detected and identified e.g. by a barcode 3 and/or cap color
3. The bulk loader device 20 sends a relabeling request to the middleware unit 11
4. The middleware unit 11 replies a) if relabeling is required b) optionally containing the new unique ID information 2
5. the bulk loader device 20 brings the laboratory sample container 1 to the ID changer 8 or relabeling station where a new label 4 with the unique ID information 2 is e.g. put on top of the existing label 4, providing a complete coverage of the old label 4, and
6. the laboratory sample container 1 is forwarded towards the laboratory stations 12

The invention enables to process duplicate ID information and aliquots on an automated laboratory system. The invention overcomes the current relation between barcode and cap color by providing a unique label or ID information to ensure that a removal of the cap is possible and the sample can still be distinguished from all others on the automated laboratory system even if it leaves the automation and is reinserted into automation again at a later point in time.

## Claims

1. Method of handling laboratory sample containers (1) by means of a laboratory sample container handling system (100), wherein the method comprises the steps:
- providing a laboratory sample container (1) comprising an assigned ID information (2) to the laboratory sample container handling system (100),
- reading the assigned ID information (2),
- checking, if the read ID information (2) is unique or not unique within the laboratory sample container handling system (100),
- if the read ID information (2) is not unique within the laboratory sample container handling system (100), assigning a new ID information (2) to the laboratory sample container (1), wherein the new ID information (2) is unique within the laboratory sample container handling system (100), and removing a cap (5) closing the laboratory sample container (1) after the new ID information (2) has been assigned to the laboratory sample container (1).

2. Method according to claim 1, **characterized in that**
- the ID information (2) is embodied as a barcode (3) printed on a label (4) attached to the laboratory sample container (1), and
- assigning the new ID information (2) to the laboratory sample container (1) is performed by attaching a new label (4) to the laboratory sample container (1), wherein a barcode (3) representing the new ID information (2) is printed on the new label (4).

3. Method according to one of the preceding claims, **characterized in that**
- the ID information (2) is embodied as a value stored in a RFID tag (10) attached to the laboratory sample container (1), and
- assigning the new ID information (2) to the laboratory sample container (1) is performed by overwriting the stored value by the new ID information (2).

4. Method according to one of the preceding claims, **characterized in that**
- the laboratory sample container (1) is further processed after the new ID information (2) has been assigned to the laboratory sample container (1) based on the new ID information (2).

5. Method according to one of the preceding claims, **characterized in that**
- the laboratory sample container (1) comprises a laboratory sample (6), wherein the laboratory sample (6) is analyzed based on the ID information (2).

6. Method according to one of the preceding claims, **characterized in that**
- the laboratory sample containers (1) are provided to the laboratory sample container handling system (100) in a bulk commodity, wherein the laboratory sample containers (1) are singularized, wherein the new ID information (2) is assigned to the laboratory sample containers (1) after, in particular immediately after, the laboratory sample containers (1) have been singularized.

7. Laboratory sample container handling system (100), comprising:
- a reader (7) being adapted to read ID information (2) being assigned to a laboratory sample container (1) provided to the laboratory sample container handling system (100),
- an ID changer (8) being adapted to assign a new ID information (2) to the laboratory sample container (1), and
- a control unit (9) coupled to the reader (7) and to the ID changer (8) and being adapted
- to control the laboratory sample container handling system (100) such that a method according to one of the preceding claims is performed.

8. Laboratory sample container handling system (100) according to claim 7, **characterized in that**
- the laboratory sample container handling system (100) comprises a middleware unit (11) being adapted to check, if the read ID information (2) is unique or not unique within the laboratory sample container handling system (100), and if the read ID information (2) is not unique within the laboratory sample container handling system (100), to assign a new ID information (2) to the laboratory sample container (1), wherein the new ID information (2) is unique within the laboratory sample container handling system (100).

9. Laboratory sample container handling system (100) according to claim 7 or 8, **characterized in that**
- the reader (7) is a barcode reader.

10. Laboratory sample container handling system (100) according to one of claims 7 to 9, **characterized in that**
- the reader (7) is a RFID reader.

11. Laboratory sample container handling system (100) according to one of claims 7 to 10, **characterized in that**
- the ID changer (8) is a printer.

12. Laboratory sample container handling system (100) according to one of claims 7 to 11, **characterized in that**
- the ID changer (8) is a RFID reader.

13. Laboratory automation system (1000), **characterized in that** the laboratory automation system (1000) comprises
- a laboratory sample container handling system (100) according to one of claims 7 to 11,
- a number of laboratory stations (12) being adapted to process a laboratory sample (6) contained in the laboratory sample container (1) based on the ID information (2).

## Patentansprüche

1. Verfahren zum Handhaben von Laborprobenbehältern (1) mithilfe eines Laborprobenbehälterhandhabungssystems (100), wobei das Verfahren die folgenden Schritte umfasst:
- Bereitstellen eines Laborprobenbehälters (1), der eine zugewiesene ID-Information (2) umfasst, dem Laborprobenbehälterhandhabungssystem (100),
- Lesen der zugewiesenen ID-Information (2),
- Überprüfen, ob die gelesene ID-Information (2) innerhalb des Laborprobenbehälterhandhabungssystems (100) einmalig oder nicht einmalig ist,
- Zuweisen einer neuen ID-Information (2) dem Laborprobenbehälter (1), wenn die gelesene ID-Information (2) innerhalb des Laborprobenbehälterhandhabungssystems (100) nicht einmalig ist, wobei die neue ID-Information (2) innerhalb des Laborprobenbehälterhandhabungssystems (100) einmalig ist, und Entfernen einer Kappe (5), die den Laborprobenbehälter (1) verschließt, nachdem die neue ID-Information (2) dem Laborprobenbehälter (1) zugewiesen worden ist.

2. Verfahren nach Anspruch 1, **dadurch gekennzeichnet, dass**
- die ID-Information (2) als ein Strichcode (3) ausgeführt ist, der auf ein an dem Laborprobenbehälter (1) angebrachten Etikett (4) gedruckt ist, und
- das Zuweisen der neuen ID-Information (2) dem Laborprobenbehälter (1) mittels Anbringen eines neuen Etiketts (4) an dem Laborprobenbehälter (1) durchgeführt wird, wobei ein Strichcode (3), der die neue ID-Information (2) darstellt, auf das neue Etikett (4) gedruckt wird.

3. Verfahren nach einem der vorstehenden Ansprüche, **dadurch gekennzeichnet, dass**
- die ID-Information (2) als ein Wert ausgeführt ist, der in einem RFID-Tag (10) gespeichert ist, das an dem Laborprobenbehälter (1) angebracht ist, und
- das Zuweisen der neuen ID-Information (2) dem Laborprobenbehälter (1) mittels Überschreiben des gespeicherten Wertes mit der neuen ID-Information (2) durchgeführt wird.

4. Verfahren nach einem der vorstehenden Ansprüche, **dadurch gekennzeichnet, dass**
- der Laborprobenbehälter (1) basierend auf der neuen ID-Information (2) weiterbearbeitet wird, nachdem die neue ID-Information (2) dem Laborprobenbehälter (1) zugewiesen worden ist.

5. Verfahren nach einem der vorstehenden Ansprüche, **dadurch gekennzeichnet, dass**
- der Laborprobenbehälter (1) eine Laborprobe (6) umfasst, wobei die Laborprobe (6) basierend auf der ID-Information (2) analysiert wird.

6. Verfahren nach einem der vorstehenden Ansprüche, **dadurch gekennzeichnet, dass**
- die Laborprobenbehälter (1) dem Laborprobenbehälterhandhabungssystem (100) als Massenware bereitgestellt werden, wobei die Laborprobenbehälter (1) vereinzelt werden, wobei die neue ID-Information (2) den Laborprobenbehältern (1) zugewiesen wird, nachdem, insbesondere unmittelbar nachdem, die Laborprobenbehälter (1) vereinzelt worden sind.

7. Laborprobenbehälterhandhabungssystem (100), umfassend:
- ein Lesegerät (7), das dafür ausgelegt ist, ID-Informationen (2) zu lesen, die einem dem Laborprobenbehälterhandhabungssystem (100) bereitgestellten Laborprobenbehälter (1) zugewiesen sind,
- einen ID-Änderer (8), der dafür ausgelegt ist, dem Laborprobenbehälter (1) eine neue ID-Information (2) zuzuweisen, und
- eine Steuerungseinheit (9), die an das Lesegerät (7) und an den ID-Änderer (8) gekoppelt und dafür ausgelegt ist, das Laborprobenbehälterhandhabungssystem (100) derart zu steuern, dass ein Verfahren nach einem der vorstehenden Ansprüche ausgeführt wird.

8. Laborprobenbehälterhandhabungssystem (100) nach Anspruch 7, **dadurch gekennzeichnet, dass**
- das Laborprobenbehälterhandhabungssystem (100) eine Middleware-Einheit (11) umfasst, die dafür ausgelegt ist, zu überprüfen, ob die gelesene ID-Information (2) innerhalb des Laborprobenbehälterhandhabungssystems (100) einmalig oder nicht einmalig ist, und, wenn die gelesene ID-Information (2) innerhalb des Laborprobenbehälterhandhabungssystems (100) nicht einmalig ist, dem Laborprobenbehälter (1) eine neue ID-Information (2) zuzuweisen, wobei die neue ID-Information (2) innerhalb des Laborprobenbehälterhandhabungssystems (100) einmalig ist.

9. Laborprobenbehälterhandhabungssystem (100) nach Anspruch 7 oder 8, **dadurch gekennzeichnet, dass**
- das Lesegerät (7) ein Strichcode-Lesegerät ist.

10. Laborprobenbehälterhandhabungssystem (100) nach einem der Ansprüche 7 bis 9, **dadurch gekennzeichnet, dass**
- das Lesegerät (7) ein RFID-Lesegerät ist.

11. Laborprobenbehälterhandhabungssystem (100) nach einem der Ansprüche 7 bis 10, **dadurch gekennzeichnet, dass**
- der ID-Änderer (8) ein Drucker ist.

12. Laborprobenbehälterhandhabungssystem (100) nach einem der Ansprüche 7 bis 11, **dadurch gekennzeichnet, dass**
- der ID-Änderer (8) ein RFID-Lesegerät ist.

13. Laborautomatisierungssystem (1000), **dadurch gekennzeichnet, dass** das Laborautomatisierungssystem (1000) Folgendes umfasst
- ein Laborprobenbehälterhandhabungssystem (100) nach einem der Ansprüche 7 bis 11,
- mehrere Laborstationen (12), die dafür ausgelegt sind, eine Laborprobe (6), die in dem Laborprobenbehälter (1) enthalten ist, basierend auf der ID-Information (2) zu bearbeiten.

## Revendications

1. Procédé de manipulation de contenants d'échantillons de laboratoire (1) au moyen d'un système de manipulation de contenant d'échantillon de laboratoire (100), dans lequel le procédé comprend les étapes :
- fourniture d'un contenant d'échantillon de laboratoire (1) comprenant des informations d'ID (2) attribuées au système de manipulation de contenant d'échantillon de laboratoire (100),
- lecture des informations d'ID (2) attribuées,
- vérification, si les informations d'ID (2) lues sont uniques ou pas uniques au sein du système de manipulation de contenant d'échantillon de laboratoire (100),
- si les informations d'ID (2) lues ne sont pas uniques au sein du système de manipulation de contenant d'échantillon de laboratoire (100), attribution de nouvelles informations d'ID (2) au contenant d'échantillon de laboratoire (1), dans lequel les nouvelles informations d'ID (2) sont uniques au sein du système de manipulation de contenant d'échantillon de laboratoire (100), et retrait d'un capuchon (5) fermant le contenant d'échantillon de laboratoire (1) après l'attribution des nouvelles informations d'ID (2) au contenant d'échantillon de laboratoire (1).

2. Procédé selon la revendication 1, **caractérisé en ce que**
- les informations d'ID (2) sont incorporées sous forme de code-barres (3) imprimé sur une étiquette (4) fixée sur le contenant d'échantillon de laboratoire (1), et
- l'attribution des nouvelles informations d'ID (2) au contenant d'échantillon de laboratoire (1) est réalisée en fixant une nouvelle étiquette (4) sur le contenant d'échantillon de laboratoire (1), dans lequel un code-barres (3) représentant les nouvelles informations d'ID (2) est imprimé sur la nouvelle étiquette (4).

3. Procédé selon l'une des revendications précédentes, **caractérisé en ce que**
- les informations d'ID (2) sont incorporées sous forme de valeur stockée dans une étiquette RFID (10) fixée sur le contenant d'échantillon de laboratoire (1), et
- l'attribution des nouvelles informations d'ID (2) au contenant d'échantillon de laboratoire (1) est réalisée en remplaçant la valeur stockée par les nouvelles informations d'ID (2).

4. Procédé selon l'une des revendications précédentes, **caractérisé en ce que**
- le contenant d'échantillon de laboratoire (1) est davantage traité après l'attribution des nouvelles informations d'ID (2) au contenant d'échantillon de laboratoire (1) sur la base des nouvelles informations d'ID (2).

5. Procédé selon l'une des revendications précédentes, **caractérisé en ce que**
- le contenant d'échantillon de laboratoire (1) comprend un échantillon de laboratoire (6), dans lequel l'échantillon de laboratoire (6) est analysé sur la base des informations d'ID (2).

6. Procédé selon l'une des revendications précédentes, **caractérisé en ce que**
- les contenants d'échantillons de laboratoire (1) sont fournis au système de manipulation de contenant d'échantillon de laboratoire (100) sous forme de marchandise en vrac, dans lequel les contenants d'échantillons de laboratoire (1) sont singularisés, dans lequel les nouvelles informations d'ID (2) sont attribuées aux contenants d'échantillons de laboratoire (1) après, en particulier immédiatement après, la singularisation des contenants d'échantillons de laboratoire (1).

7. Système de manipulation de contenant d'échantillon de laboratoire (100), comprenant :
- un lecteur (7) qui est conçu pour lire les informations d'ID (2) qui sont attribuées à un contenant d'échantillon de laboratoire (1) fourni au système de manipulation de contenant d'échantillon de laboratoire (100),
- un changeur d'ID (8) qui est adapté pour attribuer de nouvelles informations d'ID (2) au contenant d'échantillon de laboratoire (1), et
- une unité de commande (9) couplée au lecteur (7) et au changeur d'ID (8) et qui est adaptée pour commander le système de manipulation de contenant d'échantillon de laboratoire (100) de telle sorte qu'un procédé selon l'une des revendications précédentes est réalisé.

8. Système de manipulation de contenant d'échantillon de laboratoire (100) selon la revendication 7, **caractérisé en ce que**
- le système de manipulation de contenant d'échantillon de laboratoire (100) comprend une unité intergicielle (11) qui est adaptée pour vérifier, si les informations d'ID (2) lues sont uniques ou pas uniques au sein du système de manipulation de contenant d'échantillon de laboratoire (100), et si les informations d'ID (2) lues ne sont pas uniques au sein du système de manipulation de contenant d'échantillon de laboratoire (100), pour attribuer de nouvelles informations d'ID (2) au contenant d'échantillon de laboratoire (1), dans lequel les nouvelles informations d'ID (2) sont uniques au sein du système de manipulation de contenant d'échantillon de laboratoire (100).

9. Système de manipulation de contenant d'échantillon de laboratoire (100) selon la revendication 7 ou 8, **caractérisé en ce que**
- le lecteur (7) est un lecteur de codes-barres.

10. Système de manipulation de contenant d'échantillon de laboratoire (100) selon l'une des revendications 7 à 9, **caractérisé en ce que**
- le lecteur (7) est un lecteur RFID.

11. Système de manipulation de contenant d'échantillon de laboratoire (100) selon l'une des revendications 7 à 10, **caractérisé en ce que**
- le changeur d'ID (8) est une imprimante.

12. Système de manipulation de contenant d'échantillon de laboratoire (100) selon l'une des revendications 7 à 11, **caractérisé en ce que**
- le changeur d'ID (8) est un lecteur RFID.

13. Système d'automatisation de laboratoire (1000), **caractérisé en ce que** le système d'automatisation de laboratoire (1000) comprend
- un système de manipulation de contenant d'échantillon de laboratoire (100) selon l'une des revendications 7 à 11,
- un certain nombre de stations de laboratoire (12) qui sont adaptées pour traiter un échantillon de laboratoire (6) contenu dans le contenant d'échantillon de laboratoire (1) sur la base des informations d'ID (2).
